# EUROPEAN PATENT SPECIFICATION

(11) **EP 4 392 519 B1**
(45) Date of publication and mention of the grant of the patent: **26.03.2025**
(21) Application number: 22760992.2
(22) Date of filing: 05.08.2022
(51) Int. Cl.: C11D 1/62, C11D 1/66, C11D 1/72, C11D 3/20, C11D 3/37, C11D 3/48, C11D 17/00, A01N 25/04, A01N 33/12

(54) **A LIQUID DISINFECTING COMPOSITION**
FLÜSSIGE DESINFEKTIONSZUSAMMENSETZUNG
COMPOSITION DÉSINFECTANTE LIQUIDE

(30) Priority: 26.08.2021 EP 21193403
(43) Date of publication of application: 03.07.2024
(73) Proprietor: Unilever IP Holdings B.V., 3013 AL Rotterdam (NL); Unilever Global IP Limited, Wirral, Merseyside CH62 4ZD (GB)
(72) Inventor: BANDYOPADHYAY, Punam, 6708 WH Wageningen (NL); HEGISHTE, Swapnil, Ravikant, 6708 WH Wageningen (NL); PALANISAMY, Bharath, 6708 WH Wageningen (NL); PUJARI, Saswati, 6708 WH Wageningen (NL); TRIPATHY, Sweta, 6708 WH Wageningen (NL)
(74) Representative: Corsten, Michael Allan
(86) International application number: PCT/EP2022/072144
(87) International publication number: WO 2023/025575

(56) References cited:
- EP-B1- 0 842 248
- WO-A1-2007/001593
- WO-A1-2012/076309
- US-A- 5 929 016
- US-A1- 2001 056 047
- US-B1- 6 642 197

## Description

### Field of the invention

The present invention relates to a liquid disinfecting composition. More particularly it relates to a disinfecting composition which is to be diluted in water and be used for disinfecting both animate and inanimate surfaces.

### Background of the invention

Compositions for disinfecting and cleaning inanimate hard surfaces like floors, walls, windows, doors, furniture, and tabletops in various indoor and outdoor locations are known. Toilets and bathrooms are other places where germs proliferate, and disinfection and cleaning compositions are widely used. Other types of hard surfaces that are cleaned by such compositions include articles found in households, offices and other public places. They may also be used for disinfecting soft inanimate surfaces like clothes, bedsheets, pillow covers and upholstery like curtains.

These compositions may also be used for sanitizing topical surfaces of the human or animal body. They may be used as bath water, as water used for shaving, cleaning babies between diaper changes, for disinfecting pets and for sanitizing hands at homes, hospitals and in medical clinics; among a host of other personal sanitizing applications.

Such compositions are often sold in liquid form, usually as a concentrate in a bottle. The consumer dilutes the composition in water forming a disinfecting liquor and use it on desired surfaces. Typically, these concentrates are transparent or visually clear in appearance and diluting in water would provide a transparent liquor. Thus, consumers find difficulty to judge on the readiness of the disinfecting liquor on dilution. Further, consumers also look for a cue about the presence of disinfecting actives in the liquor. Therefore, consumer prefer to have a visual cue which indicates that the liquor is ready for use. Visual cues are certain change in the appearance of the liquid. Generation of cloudiness or clouding on dilution is one of such cues.

There are a few products available in the market generating a clouding effect on dilution thus, providing required cue to consumers. However, these products are either phenolic based or pine-oil based. Typically, phenolic based products are suitable of bathroom cleaning and identifiable by their strong smell, which is not liked by consumer for cleaning animate surfaces as well as certain household surfaces like tabletop, kitchen platforms. Pine oil-based disinfecting compositions tend to be costly due to raw materials like pine oil.

Further, aesthetic or appearance of the product is one of the attributes consumers often look for and they expect that such attributes remain the same throughout the storage. The aesthetic or appearance herein preferably relates to the product as such and does not relate to diluted form. In this context, cloud point of the product is an important parameter. Commonly, cloud point refers to the temperature below which a transparent liquid product turns hazy. Thus, appearance of the product tends to change, depending on storing environments and/or geographies with different environmental conditions, which is not preferable. Therefore, it is expected to have a product, whose aesthetic or appearance does not change throughout the storage and using in most of the geographies irrespective of environmental conditions

Therefore, there is need for an improved liquid composition which forms a disinfecting liquor on dilution in water providing a visual cue to consumers yet have low cloud point. It is desired that the composition provides effective antimicrobial efficacy on both animate and household inanimate surfaces. It is also desired that the composition does not include any costly actives such that it become affordable.

US 6642197 B1 discloses concentrated liquid cleaning and disinfecting compositions which are normally diluted in a larger volume of water to form a working solution therefrom, and which exhibit a clouding effect when diluted. WO2012/076309 A1 discloses an anti-microbial composition that comprises natural anti-microbial actives at low concentration that has a clear transparent/ translucent appearance and becomes turbid on dilution with water. EP 0842248 B1 discloses hard surface cleaning compositions and concentrates thereof, which feature a clouding effect when the concentrate is added to a larger volume of water.

The present inventors have surprisingly found that a disinfecting composition comprising combinations of select clouding agents along with non-ionic surfactant provides improved clouding effect when diluted in water. It is further found that such composition has significantly low cloud point.

### Summary of the invention

According to the first aspect of the invention there is provided an aqueous disinfecting composition comprising
(a) 0.01 to 15 wt% of an antimicrobial agent;
(b) 0.1 to 7 wt% of a carboxylic acid or its salt having a pKa value in the range from 1.0 to 5.5;
(c) 0.01 to 15 wt% of a clouding agent comprising:
   i) propylene butyl glycol ether; and,
   ii) at least one more agent selected from fatty alcohol having 6 to 20 carbon atoms, fatty acid and diethyl hexyl malate;
(d) 1 to 30 wt% of an alcohol having 1 to 4 carbon atoms; and
(e) 0.01 to 10 wt% of a non-ionic surfactant.

According to another aspect of the invention there is provided a method of disinfecting a surface comprising the steps of diluting the composition of the first aspect with water in a weight ratio of 1:10 to 1:400; applying the diluted composition on to the surface, and optionally rinsing the surface with water.

### Detailed description of the invention

Any feature of one aspect of the present invention may be utilized in any other aspect of the invention. The word "comprising" is intended to mean "including" but not necessarily "consisting of" or "composed of." In other words, the listed steps or options need not be exhaustive. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format " x to y" are understood to include x and y. When for a specific feature multiple preferred ranges are described in the format "x to y", it is understood that all ranges combining the different endpoints are also contemplated. Unless specified otherwise, amounts as used herein are expressed in percentage by weight based on total weight of the composition and is abbreviated as "wt%". The use of any and all examples or exemplary language e.g. "such as" provided herein is intended merely to better illuminate the invention and does not in any way limit the scope of the invention otherwise claimed.

'Clouding' or 'clouding effect' as used herein, preferably means a milky white appearance of a solution when a transparent or visually clear liquid composition is added to water for forming a diluted solution. Preferably it provides a visual cue to consumers. Similarly, 'clouding agent' as used herein preferably means a compound that helps in generating the clouding effect in water.

'Transparent' or 'visually clear' used herein, may refer to a turbidity value of less than 40 NTU (Nephelometric Turbidity Unit), more preferably less than 30 NTU even more preferably less than 20 NTU, most preferably less than 10 NTU. Preferably, in the present context, 'Transparent' or 'visually clear' refers to a turbidity values in the range 0.5 to 40 NTU, more preferably 0.5 to 30 NTU, even more preferably 0.5 to 20 NTU and most preferably 0.5 to 10 NTU.

'Cloud point' as used herein, preferably refers to a temperature, below which a liquid product with visually clear appearance turns hazy. It is likely due to incompatibility of various liquid phases that may be present in the product. Cloud point may be correlated to the aesthetic or appearance of the product as such and is not relevant for dilutions in present context. In the present invention lower cloud point is preferable.

According to the present invention, there is provided an aqueous disinfecting composition. The composition comprises 0.01 to 15 wt% of an antimicrobial agent, 0.1 to 7 wt% of a carboxylic acid or its salt having a pKa value in the range from 1.0 to 5.5, 0.01 to 15 wt% of a clouding agent comprising propylene butyl glycol ether; and at least one more agent selected from fatty alcohol having 6 to 20 carbon atoms, fatty acid and diethyl hexyl malate, , 1 to 30 wt% of an alcohol having 1 to 4 carbon atoms, and 0.01 to 10 wt% of a non-ionic surfactant.

### Antimicrobial agent

The composition comprises an antimicrobial agent. This is the primary antimicrobial agent used in the present invention to provide the desired disinfecting action. Preferably the antimicrobial agent comprises a quaternary ammonium compound.

The quaternary ammonium compound is preferably selected from cetylpyridinium chloride (CPC), cetyltrimethylammonium chloride (CTAC), cetyltrimethylammonium bromide (CTAB), benzalkonium chloride (BKC), benzethonium chloride (BZC), cetrimide and combinations thereof.

The preferred antimicrobial agent for use in the present invention are cetyltrimethylammonium chloride (CTAC), benzalkonium chloride (BKC), benzethonium chloride, benzethonium chloride (BZC) and combinations thereof. Most preferred antimicrobial agent is benzalkonium chloride (BKC).

The composition comprises 0.01 to 15 wt% of the antimicrobial agent. Preferably the composition comprises 0.05 to 12 wt%, more preferably 1 to 10 wt%, most preferably 1.5 to 8 wt% of the antimicrobial agent.

### Carboxylic acid or its salt

The composition comprises a carboxylic acid or its salt having a pKa value in the range from 1.0 to 5.5. The carboxylic acid enhances antimicrobial efficacy of the composition.

Preferred carboxylic acid according to the invention is selected from citric acid (pKa =3.1), lactic acid (pKa =3.86), malonic acid (pKa =2.85), malic acid (pKa =3.4), oxalic acid (pKa =1.25), benzoic acid (pKa =4.24), salicylic acid (pKa =2.79), glycolic acid (pKa =3.83), tartaric acid (for L+ pKa = 2.89; and for meso pKa = 3.22) and combinations thereof.

The more preferred carboxylic acids are citric acid, malic acid, or malonic acid and combinations thereof. It is possible to also use salts of the carboxylic acids. In a highly preferred aspect, a combination of the carboxylic acid and its corresponding salt e.g., sodium salt is preferred for inclusion in the composition of the invention. For example, citric acid and sodium salt both, may be used in the composition of the invention

The composition comprises 0.1 to 7 wt% carboxylic acid or its salt. Preferably the composition comprises 0.2 to 6 wt%, more preferably 0.5 to 5 wt%, and most preferably 0.8 to 4 wt% carboxylic acid or its salt.

### Clouding agent

The composition of the invention comprises a clouding agent. The clouding agent helps in generating clouding during dilution of the composition. The clouding agent comprises at least two clouding agents, comprising propylene butyl glycol ether and at least one more agent selected from fatty alcohol having 6 to 20 carbon atoms, fatty acid and diethyl hexyl malate. It is observed that combination of clouding agents significantly improved clouding effect on dilution.

Preferably the fatty acid has 6 to 24 carbon atoms. Preferably, the fatty acid has 8 to 22 carbon atoms, most preferably 10 to 18 carbon atoms. Fatty acids which are liquid at room temperature are particularly preferred in the present invention. Preferably, the fatty acid is selected from iso-stearic acid, oleic acid, and a combination thereof.

Fatty alcohol suitable for the invention includes those having long chain saturated or unsaturated alcohol having 6 to 20 carbon atoms. Preferably the fatty alcohol has 8 to 18 carbon atoms.

Preferably the fatty alcohol is selected from octanol, dodecanol, iso-stearyl alcohol and combinations thereof.

Preferably the clouding agent comprises polypropylene glycol butyl ether having 5 to 25 ethoxy units per molecule. More preferably the clouding agent comprises polypropylene glycol having 7 to 22, even more preferably 10 to 20 ethoxy unites per molecule. One of the preferred clouding agents is poly-propylene glycol butyl ether having 14 ethoxy units per molecule.

Most preferably the clouding agent comprises a combination of dodecanol and polypropylene glycol butyl ether having 14 ethoxy units per molecule.

Other polar oil suitable for the invention includes octanoic acid, iso-decanol, diethyl malonate, oleyl alcohol, iso-cetyl alcohol, di-isobutyl adipate, di-caprylyl maleate, diethyl hexyl succinate, diisopropyl sebacate, di-propylene glycol di-benzoate, PPG-15 Stearyl ether, diethyl hexyl phthalate etc.

The composition comprises 0.01 to 15 wt% of the clouding agent. More preferably the composition comprises 0.05 to 10 wt%, most preferably 0.1 to 8 wt% of the clouding agent.

### Alcohol having 1 to 4 carbon atoms

The composition comprises an alcohol having 1 to 4 carbon atoms. The alcohol acts as co-solvent to solubilize the clouding agent in the composition.

Preferably the alcohol is selected from isopropyl alcohol (IPA), ethanol, butanol, and combinations thereof. More preferred alcohol is isopropyl alcohol or ethanol. Most preferred being isopropyl alcohol. Sometimes a mixture of IPA and ethanol may be used.

The composition comprises from 1 to 30 wt% of the alcohol. More preferably the composition comprises from 3 to 30 wt% and most preferably from 5 to 30 wt% of the alcohol.

### Nonionic surfactant

The composition comprises a non-ionic surfactant. The non-ionic surfactant in presence of the clouding agent reduces the cloud point of the composition.

Lower the cloud point is better for the present invention. Preferably the composition has a cloud point not more than 10°C, more preferably not more than 8°C.

Preferably the non-ionic surfactant has an HLB value above 10. HLB is calculated using the Griffin method wherein HLB = 20 x Mh / M wherein Mh is the molecular mass of the hydrophilic portion of the molecule and M is the molecular mass of the whole molecule, giving a result on an arbitrary scale of 0 to 20. A value of HLB less than 10 is usually a lipid soluble surfactant while one having a value higher than 10 is usually water soluble.

Preferably the non-ionic surfactant is selected from alkyl polyglycoside, poly-oxyethylene sorbitan alkyl esters, alkyl phenol ethoxylates, alkyl ethoxylates and combinations thereof.

Preferably the non-ionic surfactant is alkyl plolyglycoside. As used herein alkyl polyglycosides are compounds having formula R₁O(R₂O)_{b}(Z)ₐ, wherein R₁ is a alkyl radical, having from about 8 to about 10 carbon atoms; R₂ is an alkylene radical having from 2 to 4 carbon atoms; Z is a saccharide residue having 5 or 6 carbon atoms; b is a number having a value from 0 to about 12; and a is a number having a value from 1 to about 6 (the degree of polymerization). Due to the method by which they are synthesized, alkyl polyglycosides are generally present as mixtures of alkyl polyglycosides having varying amounts of carbon atoms in the alkyl radical and varying degrees of polymerization. Thus, when referring to alkyl polyglycosides, the alkyl radical is generally referred to as having a range of carbon atoms (e.g., C8/10 referring to a range of alkyl radicals having from 8 to 10 carbon atoms) and the degree of polymerization is generally referred to as the average degree of polymerization of the mixture.

Preferably the alkyl polyglycoside is an alkyl polyglucoside surfactant.

Preferred alkyl polyglycosides suitable for the invention include those having the above formula wherein Z is a glucose residue, b is zero, R₁ is an alkyl group that contains 8 to 10 carbon atoms, and the average value of a is about 1 to 2. Such alkyl polyglucosides are commercially available, for example, as Glucopon^{®} branded alkyl polyglucoside compositions from BASF (formerly Cognis Corporation), including Glucopon^{®} 215CS UP and 225 DK.

Preferably the non-ionic surfactant is selected from the class of the fatty alcohol ethoxylate and are sold under the trade names of Brij 35, Brij 97, Brij700, Brij 99, Brij 56, Brij 76, C12EO7, and Brij S10. Preferred non-ionic surfactants of the fatty acid ethoxylate class are sold under the brand names of Myrj S20, Myrj S40, Myrj S40, Myrj S50, and PEG-100 stearate. Preferred non-ionic surfactants of the polyoxyethylene sorbitan alkyl esters class are sold under the brand names of Tween 21, Tween20, Tween40, Tween 60, Tween 65 tristearate, Tween 85 trioleate, and Tween 80. Preferred non-ionic surfactants of the alkyl phenol ethoxylate class are sold under the brand names of Triton X114, Triton X100, Triton X102, TritonX165, Triton X305, TritonX405 or Triton X705. It is observed that the above-mentioned non-ionic surfactants all have an HLB value higher than 10.

Preferably the non-ionic surfactant is selected from the class of poly-oxyethylene sorbitan alkyl ester. These surfactants are available under the trade name Tween or Triton, for example, Tween 20 (polyoxyethylene sorbitan monolaurate, HLB=16.7), Tween 40(polyoxyethylene sorbitan monopalmitate, HLB=15.6),Tween60 (Polyoxyethylene sorbitan monostearate, HLB=14.9), Tween65 (Polyoxyethylene sorbitan tristearate, HLB=10.5), Tween80 (Polyoxyethylene sorbitan monooleate, HLB=15.0), Tween85 (Polyoxyethylene sorbitan trioleate, HLB=11.0),Triton(Octylphenol Ethoxylates),e.g., HLB=12.3), TritonX114 (HLB =12.3),Triton ( HLB=13.4), Triton X102(HLB=14.4),Triton X305(HLB=17.3), TritonX405( HLB=17.3), Triton X705 ( HLB=18.4) etc.

The composition comprises from 0.01 to 10 wt% non-ionic surfactant. Preferably the composition comprises from 0.05 to 9 wt%, more preferably 0.08 to 8 wt%, even more preferably 0.1 to 7 wt% and most preferably 0.2 to 6 wt% of non-ionic surfactant.

### pH of the composition

Preferably the composition of the invention has a pH in the range of 3.0 to 7.0. More preferably the composition has a pH in the range 3.5 to 6.5 and most preferably 4.0 to 6.0. Preferably the carboxylic acid also works as pH regulator.

### Application

The composition of the invention is considered a liquid concentrate for use in disinfection of desired surfaces. The composition is considered as a concentrate since it is usually to be used after diluting with water after which it is applied on the desired surfaces for disinfection.

Personal care applications where the composition may be used are for example in shaving and as bath water. In the case of shaving the composition may be diluted with water in a weight ratio in the range of 1: 33 to 1: 100. This diluted solution may be used to dip the blade in e.g., a mug which is used for shaving so that any germs in the blade or from the surroundings may not attack the skin surface which is being shaved. Similar diluted compositions may be used for cleaning babies between diaper changes to ensure that germs do not multiply on the tender skin of babies. They may be used as an antiseptic liquid for disinfection of hands and other bodily surfaces which are generally considered the nodal points for spreading diseases. Preferably the composition is used for non-therapeutic purposes.

In the case of bath water, the composition may be used in a bucket or a bathtub with large amounts of water where the person takes a bath, or an animal is bathed. The product may also be used with such large dilutions in various other applications meant for disinfection of inanimate surfaces. Such surfaces include disinfection of floors, kitchen tops, bathrooms in homes, and public places like offices, hotels, and restaurants. They may also be used to disinfect places which are known to have a high density of sick people like in hospitals, clinics and other healthcare facilities.

Other inanimate surfaces include soft surfaces like clothes and upholstery. The compositions diluted with water may be used for disinfecting clothes that are considered dirtier like underwear or clothes used for sports or for use in the gyms. These clothes are soaked in such disinfectant solutions before putting them in a washing machine for regular washing and cleaning. Alternately, the clothes already handwashed or machine washed may be soaked and rinsed in the composition of the invention, which is diluted in water, before they are dried to ensure that any residual germs are killed before the next use by the consumer. In the above cases, the composition of the invention may be diluted in water in a weight ratio in the range of 1:10 to 1:400, preferably 1: 66 to 1:333.

The composition according to the present invention provides enhanced antimicrobial efficacy. Preferably the composition does not contain any conventional disinfectants like bleaches e.g., halogens, halogenated compounds, and active oxygen-based bleaches. However, if they are present, the amount of such disinfectants is less than 1 wt%, preferably less than 0.5 wt%, more preferably less than 0.1 wt%.

The composition may further comprise various additional ingredients known to a person skilled in the art. Such additional ingredients include but are not limited to perfumes, pigments, preservatives, emollients, sunscreens, emulsifiers, gelling agents, or thickening agents.

The antimicrobial composition is generally in the form of a liquid, but the liquid composition may be further thickened to a gel or a paste.

According to another aspect of the present invention there is provided a method of disinfecting a surface comprising the steps of diluting the composition as claimed in any one of the preceding claims with water in a weight ratio of 1:10 to 1:400, applying the diluted composition on to the desired surface, and optionally rinsing the surface with water.

Preferably the diluted composition is in contact with the surface for 10 seconds to 5 minutes.

Wherein the surface is skin, and method relates to disinfecting personal body parts, preferably the composition is used for non-therapeutic purposes. It includes contacting the diluted composition topically as a protective measure from potential infections. It may be considered as part of personal hygiene. The composition or method nowhere related to treating any medical conditions. Rather it may relate to conventional sanitization habits of consumers.

An especially beneficial aspect of the present invention is that the high antimicrobial efficacy is obtained in many cases at very high dilutions. Further, the efficacy is observed in as short a time of contact as five minutes or less and in some cases in one minute or less.

The invention will now be illustrated with the help of the following non-limiting examples.

### Examples

Ex -1 and Ex- A to D were prepared according to recipe provided in table 1. Ex-1 is a composition within the scope of the invention and Ex-A to D are comparative.

**Table 1**

| Ingredient (wt%) | Ex-1 | Ex-A | Ex-B | Ex-C | Ex-D |
|---|---|---|---|---|---|
| Benzalkonium Chloride | 6.0 | 6.0 | 6.0 | 6.0 | 6.0 |
| Sodium citrate | 1.4 | 1.4 | 1.4 | 1.4 | 1.4 |
| Citric acid monohydrate | 1.1 | 1.1 | 1.1 | 1.1 | 1.1 |
| PPG-14 butyl ether¹ | 5.5 | 5.5 | - | 5.5 | - |
| Dodecanol | 2.5 | 2.5 | - | - | 2.5 |
| Alkyl polyglucoside | 0.5 | - | 0.5 | 0.5 | 0.5 |
| Iso-propyl alcohol | 25.0 | 25.0 | 25.0 | 25.0 | 25.0 |
| Perfume | 0.5 | 0.5 | 0.5 | 0.5 | 0.5 |
| Water | To 100 | To 100 | To 100 | To 100 | To 100 |
| | | | | | |
| Turbidity before dilution (NTU) | ~ 5 to 8 | ~ 5 to 8 | ~ 5 to 8 | ~ 5 to 8 | ~ 5 to 8 |
| Turbidity after dilution (NTU) | 667 | 572 | <5 | 279 | 250 |
| Cloud point (temperature) | 2°C | 13°C | - | -10°C | -4°C |

| | | | | | |
|---|---|---|---|---|---|
| ¹ Polypropylene glycol butyl ether (14 ethoxy unit per molecule) | | | | | |

To evaluate the clouding effect on dilution, 5 mL of each composition (Ex-1 and Ex- A to D) was added to 400 ml of water in a glass beaker. Typically, 'clouding' refers to milky white appearance of the solution during dilution. The clouding effect was evaluated by measuring turbidity of the solution within 30 seconds of dilution at room temperature (23±2 °C). Turbidity is expressed in Nephelometric Turbidity Unit (NTU), higher the value in NTU implies higher turbidity. In the present context higher NTU value signifies better clouding. Typically, a turbidity value of 20 NTU or more is visually perceivable by consumers. Turbidity of each composition was measured before and after dilution using a turbidity meter at room temperature (23±2 °C) and summarised in table 1. 'Cloud point' of each composition as such (without dilution) was estimated and summarised in table 1.

According to table 1, Ex-1 on dilution, provides a turbidity value of 667 NTU, Ex-B does not provide any turbidity on dilution. Ex-A provides turbidity in dilution, however, has a cloud point 13°C, which is significantly higher than that of Ex-1 (2°C). Ex- C and D containing any one of the clouding agents provide a turbidity value of 275 and 250 NTU respectively, which is significantly low compared to Ex-1 (667 NTU) individually as well as in cumulatively.

The data in the tables indicate that the examples according to the invention have low cloud point and generate significant clouding effect on dilution.

## Claims

1. An aqueous disinfecting composition comprising
(a) 0.01 to 15 wt% of an antimicrobial agent;
(b) 0.1 to 7 wt% of a carboxylic acid or its salt having a pKa value in the range from 1.0 to 5.5;
(c) 0.01 to 15 wt% of a clouding agent comprising:
i) polypropylene butyl glycol ether; and,
ii) at least one more clouding agent selected from fatty alcohol having 6 to 20 carbon atoms, fatty acid, and diethyl hexyl malate;
(d) 1 to 30 wt% of an alcohol having 1 to 4 carbon atoms; and
(e) 0.01 to 10 wt% of a non-ionic surfactant.

2. The composition as claimed in claim 1 wherein the antimicrobial agent comprises a quaternary ammonium compound.

3. The composition as claimed in claim 2 wherein the quaternary ammonium compound is selected from cetylpyridinium chloride (CPC), cetyltrimethylammonium chloride (CTAC), cetyltrimethylammonium bromide (CTAB), benzalkonium chloride (BKC), benzethonium chloride (BZC), cetrimide and combinations thereof.

4. The composition as claimed in any one of claims 1 to 3 wherein the carboxylic acid is selected from citric acid, lactic acid, malonic acid, malic acid, oxalic acid, benzoic acid, salicylic acid and combinations thereof.

5. The composition as claimed in any one of claims 1 to 4 wherein the clouding agent comprises fatty acid selected from iso-stearic acid, oleic acid, and a combination thereof.

6. The composition as claimed in any one of claims 1 to 4 wherein the clouding agent comprises fatty alcohol selected from octanol, dodecanol, iso-stearyl alcohol and combinations thereof.

7. The composition as claimed in any one of claims 1 to 6 wherein the clouding agent comprises polypropylene glycol butyl ether having 5 to 25 ethoxy units per molecule.

8. The composition as claimed in claim 7 wherein the clouding agent comprises polypropylene glycol butyl ether having 14 ethoxy unit per molecule.

9. The composition as claimed in any one of claims 1 to 4 and 6 to 8 wherein the clouding agent is a combination of dodecanol and polypropylene glycol butyl ether having 14 ethoxy unit per molecule.

10. The composition as claimed in any one of claims 1 to 9 wherein the alcohol is selected from isopropyl alcohol, ethanol, butanol, and combinations thereof.

11. The composition as claimed in any one of claims 1 to 10 wherein the non-ionic surfactant is selected from alkyl polyglycoside, poly-oxyethylene sorbitan alkyl esters, alkyl phenol ethoxylates and combinations thereof.

12. The composition as claimed in claim 11 wherein the non-ionic surfactant is alkyl plolyglycoside.

13. The composition as claimed in any one of claims 1 to 12 wherein the composition comprises from 40 to 90 wt% water.

14. A method of disinfecting a surface comprising the steps of
a) diluting the composition as claimed in any one of claims 1 to 13 with water in a weight ratio 1:10 to 1:400;
b) applying the diluted composition on to the desired surface; and
c) optionally rinsing the surface with water.

15. The method as claimed in claim 14 wherein the diluted composition is in contact with the surface for 10 seconds to 5 minutes.

## Patentansprüche

1. Wässrige Desinfektionszusammensetzung, die umfasst:
(a) 0,01 bis 15 Gew.-% eines antimikrobiellen Mittels;
(b) 0,1 bis 7 Gew.-% einer Carbonsäure oder ihres Salzes mit einem pKa-Wert in dem Bereich von 1,0 bis 5,5;
(c) 0,01 bis 15 Gew.-% eines Trübungsmittels, das umfasst:
i) Polypropylenbutylglykolether; und
ii) mindestens ein oder mehrere Trübungsmittel, ausgewählt unter Fettalkohol mit 6 bis 20 Kohlenstoffatomen, Fettsäure und Diethylhexylmalat;
(d) 1 bis 30 Gew.-% eines Alkohols mit 1 bis 4 Kohlenstoffatomen; und
(e) 0,01 bis 10 Gew.-% eines nicht-ionischen Tensids.

2. Zusammensetzung, wie in Anspruch 1 beansprucht, wobei das antimikrobielle Mittel eine quaternäre Ammoniumverbindung umfasst.

3. Zusammensetzung, wie im Anspruch 2 beansprucht, wobei die quaternäre Ammoniumverbindung unter Cetylpyridiniumchlorid (CPC), Cetyltrimethylammoniumchlorid (CTAC), Cetyltrimethylammoniumbromid (CTAB), Benzalkoniumchlorid (BKC), Benzethoniumchlorid (BZC), Cetrimid und Kombinationen davon ausgewählt ist.

4. Zusammensetzung, wie in irgendeinem der Ansprüche 1 bis 3 beansprucht,
wobei die Carbonsäure unter Citronensäure, Milchsäure, Malonsäure, Äpfelsäure, Oxalsäure, Benzoesäure, Salicylsäure und Kombinationen davon ausgewählt ist.

5. Zusammensetzung, wie in irgendeinem der Ansprüche 1 bis 4 beansprucht,
wobei das Trübungsmittel Fettsäure umfasst, ausgewählt unter Isostearinsäure, Ölsäure und einer Kombination davon.

6. Zusammensetzung, wie in irgendeinem der Ansprüche 1 bis 4 beansprucht, wobei das Trübungsmittel Fettalkohol umfasst, ausgewählt unter Octanol, Dodecanol, Isostearylalkohol und Kombinationen davon.

7. Zusammensetzung, wie in irgendeinem der Ansprüche 1 bis 6 beansprucht, wobei das Trübungsmittel Polypropylenglykolbutylether mit 5 bis 25 Ethoxyeinheiten pro Molekül umfasst.

8. Zusammensetzung, wie im Anspruch 7 beansprucht, wobei das Trübungsmittel Polypropylenglykolbutylether mit 14 Ethoxyeinheiten pro Molekül umfasst.

9. Zusammensetzung, wie in irgendeinem der Ansprüche 1 bis 4 und 6 bis 8 beansprucht, wobei das Trübungsmittel eine Kombination von Dodecanol und Polypropylenglykolbutylether mit 14 Ethoxyeinheiten pro Molekül ist.

10. Zusammensetzung, wie in irgendeinem der Ansprüche 1 bis 9 beansprucht, wobei der Alkohol unter Isopropylalkohol, Ethanol, Butanol und Kombinationen davon ausgewählt ist.

11. Zusammensetzung, wie irgendeinem der Ansprüche 1 bis 10 beansprucht,
wobei das nicht-ionische Tensid unter Alkylpolyglycosiden,
Polyoxyethylensorbitanalkylestern, Alkylphenolethoxylaten und Kombinationen davon ausgewählt ist.

12. Zusammensetzung, wie im Anspruch 11 beansprucht, wobei das nicht-ionische Tensid Alkylpolyglycosid ist.

13. Zusammensetzung, wie in irgendeinem der Ansprüche 1 bis 12 beansprucht, wobei die Zusammensetzung 40 bis 90 Gew.-% Wasser umfasst.

14. Verfahren zum Desinfizieren einer Oberfläche, umfassend die Schritte
a) Verdünnen der Zusammensetzung, wie in irgendeinem der Ansprüche 1 bis 13 beansprucht, mit Wasser in einem Gewichtsverhältnis von 1:10 bis 1:400;
b) Auftragen der verdünnten Zusammensetzung auf die ausgewählte Oberfläche; und
c) optional Abspülen der Oberfläche mit Wasser.

15. Verfahren, wie im Anspruch 14 beansprucht, wobei die verdünnte Zusammensetzung mit der Oberfläche 10 Sekunden bis 5 Minuten lang in Kontakt steht.

## Revendications

1. Composition aqueuse désinfectante comprenant
(a) 0,01 à 15 % en poids d'un agent antimicrobien ;
(b) 0,1 à 7 % en poids d'un acide carboxylique ou de son sel ayant une valeur de pKa située dans la plage allant de 1,0 à 5,5 ;
(c) 0,01 à 15 % en poids d'un agent opacifiant comprenant :
i) un éther butylique de polypropylèneglycol ; et
ii) au moins un autre agent opacifiant choisi parmi un alcool gras ayant 6 à 20 atomes de carbone, un acide gras, et le malate de diéthylhexyle ;
(d) 1 à 30 % en poids d'un alcool ayant 1 à 4 atomes de carbone ; et
(e) 0,01 à 10 % en poids d'un tensioactif non-ionique.

2. Composition selon la revendication 1, dans laquelle l'agent antimicrobien comprend un composé d'ammonium quaternaire.

3. Composition selon la revendication 2, dans laquelle le composé d'ammonium quaternaire est choisi parmi le chlorure de cétylpyridinium (CPC), le chlorure de cétyltriméthylammonium (CTAC), le bromure de cétyltriméthylammonium (CTAB), le chlorure de benzalkonium (BKC), le chlorure de benzéthonium (BZC), le cétrimide et leurs combinaisons.

4. Composition selon l'une quelconque des revendications 1 à 3, dans laquelle l'acide carboxylique est choisi parmi l'acide citrique, l'acide lactique, l'acide malonique, l'acide malique, l'acide oxalique, l'acide benzoïque, l'acide salicylique et leurs combinaisons.

5. Composition selon l'une quelconque des revendications 1 à 4, dans laquelle l'agent opacifiant comprend un acide gras choisi parmi l'acide isostéarique, l'acide oléique, et leurs combinaisons.

6. Composition selon l'une quelconque des revendications 1 à 4, dans laquelle l'agent opacifiant comprend un alcool gras choisi parmi l'octanol, le dodécanol, l'alcool isostéarylique et leurs combinaisons.

7. Composition selon l'une quelconque des revendications 1 à 6, dans laquelle l'agent opacifiant comprend un éther butylique de polypropylèneglycol ayant 5 à 25 motifs éthoxy par molécule.

8. Composition selon la revendication 7, dans laquelle l'agent opacifiant comprend un éther butylique de polypropylèneglycol ayant 14 motifs éthoxy par molécule.

9. Composition selon l'une quelconque des revendications 1 à 4 et 6 à 8, dans laquelle l'agent opacifiant est une combinaison de dodécanol et d'éther butylique de polypropylèneglycol ayant 14 motifs éthoxy par molécule.

10. Composition selon l'une quelconque des revendications 1 à 9, dans laquelle l'alcool est choisi parmi l'alcool isopropylique, l'éthanol, le butanol, et leurs combinaisons.

11. Composition selon l'une quelconque des revendications 1 à 10, dans laquelle le tensioactif non-ionique est choisi parmi un alkylpolyglycoside, les esters alkyliques de sorbitan polyoxyéthylénés, les alkyphénols éthoxylés, et leurs combinaisons.

12. Composition selon la revendication 11, dans laquelle le tensioactif non-ionique est un alkylpolyglycoside.

13. Composition selon l'une quelconque des revendications 1 à 12, dans laquelle la composition comprend de 40 à 90 % en poids d'eau.

14. Procédé de désinfection d'une surface, comprenant les étapes de
a) dilution de la composition de l'une quelconque des revendications 1 à 13 avec de l'eau en un rapport en poids de 1/10 à 1/400 ;
b) application de la composition diluée sur la surface souhaitée ; et
c) éventuellement rinçage à l'eau de la surface.

15. Procédé selon la revendication 14, dans lequel la composition diluée est en contact avec la surface pendant 10 secondes à 5 minutes.
